# EUROPEAN PATENT APPLICATION

(11) **EP 1 420 401 A1**
(43) Date of publication of application: **19.05.2004**
(21) Application number: 02090378.7
(22) Date of filing: 14.11.2002
(51) Int. Cl.: G11B 20/00, G11B 20/12, G11B 20/10

(54) **Method and apparatus for converting a compressed audio data stream with fixed frame length including a bit reservoir feature into a different-format data stream**

(71) Applicant: DEUTSCHE THOMSON-BRANDT GMBH, 78048 Villingen-Schwenningen (DE)
(72) Inventor: Schröder, Ernst Dr., 30655 Hannover (DE); Spille, Jens, 30966 Hemmingen (DE); Boehm, Johannes, 37083 Göttingen (DE)
(74) Representative: Hartnack, Wolfgang, Dipl.-Ing.

(57) **Abstract**

Data reduction coding/decoding has been standardised e.g. by ISO/IEC standards 11172-3 and 13818-3. "Layer 3" utilises compressed audio data, which are arranged in frames, consisting of consecutive fields of "headers" (2,3,12,13,14) and "audio data" (4,5,6). Typically a mechanism called "bit reservoir" is used, which allows to save some bits in an initial encoding pass. Thereafter the preliminarily saved bits are spent in a further encoding pass for such pieces of the audio signal that require more encoded bits. Using such bit reservoir leads to the fact, that not all data belonging to a single frame are actually contained within that frame. According to the invention, a data stream (1) using the "bit reservoir" feature is converted into a different-format bit stream that uses a different size of the "bit reservoir", for example a smaller size, or a bit reservoir of size zero. The data are rearranged such that less data or no data for a given data frame remain outside that audio frame.

## Description

The invention relates to a method and to an apparatus for converting a compressed audio data stream with fixed frame length including a bit reservoir feature into a different-format data stream, having in particular variable data frame length, wherein the individual frames do not include useful data from another frame.

### Background

Several methods or systems for coder/decoder data reduction of digital audio signals ('codecs') have been defined in the past. A subset of these methods are the so-called 'lossy' audio codecs, in which the audio signals are transformed and quantised so that after decoding any quantising noise and artefacts lie below a perceptual threshold. That means, they cannot be perceived by the end user, i.e. the human ear. Such codecs are also referred to as 'psychoacoustic' or 'perceptual' audio coding methods.
Several such codecs have been standardised by ISO/IEC in standards such as 11172-3 and 13818-3. A prominent member of this family is the so-called 'Layer 3', publicly better known under the name 'mp3'. It utilises compressed audio data, which are arranged in frames, consisting of consecutive fields of 'headers' and 'audio data'. Typically a mechanism called 'bit reservoir' is used, which allows to save some bits in an initial encoding pass. Thereafter the preliminarily saved bits are spent in a further encoding pass for such pieces of the audio signal that require more encoded bits for improving the audible quality of the decoded audio signal, i.e. for achieving 'CD quality' for music signals.

The cited standards allow to refrain from using the 'bit reservoir' mechanism. In such case all data belonging to a frame is actually contained between two consecutive headers. As a consequence one typically must use a higher overall bit rate, i.e. a lower degree of compression.
It is also possible to use a so-called 'variable bit rate' encoding from the beginning. In that case the amount of audio data storable within a frame is variable.

### Invention

Using the above-mentioned 'bit reservoir' leads to the fact, that not all data belonging to a given frame are actually contained within that frame. This can be disadvantageous in some applications. A solution could be to use an encoder with variable bit rate from the start of the program to be encoded. However, this is no solution if an already encoded data stream is given.
It is typical for 'perceptual' audio codecs, that the encoding process is performed on short segments of the audio signal, e.g. 1152 audio samples, which corresponds to 24ms of audio at a sampling frequency of 48kHz. The compressed data are transmitted from an encoder to a decoder in a data stream that is structured, too, in short segments of data denoted frames. These frames each typically contain header information for synchronising and general control purposes, and coded audio information for one, two (stereo) or multiple (surround) audio channels. It is a general consequence of the principle of 'perceptual' coding, that the amount of coded data, which corresponds to a short segment of the audio signal, is variable with time. This is due to the fact, that the thresholds of hearing, which are typically modelled in a 'perceptual' audio encoder, depend on the fine structure of any audio signal and on time.
As a consequence, the output data of such an encoder initially have frames with variable length. For some codecs such format may be defined ('variable bit rate coding'), for some this is not defined, because in most applications for audio data compression it is of disadvantage to have encoded data streams with frames of varying length. Therefore all such codecs implement methods to convert the immediate output of the perceptual encoding process into a data stream with frames of fixed length.
The simplest one of such methods is selecting the maximum length for such frames and filling up the data of all initially shorter frames with meaningless stuffing data, so that finally all frames have the same length. This has the disadvantage, that the total bit rate and the compression factor are now determined by the maximum-length frame.
This is not an optimal solution because in several cases like e.g. encoding an audio signal in real-time such maximum length cannot be known in advance. In other cases such maximum length may only be necessary in some rare cases of special audio signals, e.g. typically attack signals like cymbal crashes or castanets. Thus, the overall efficiency of such data compression codec is determined by these single events.
The above-mentioned 'bit reservoir' feature is described in clause 2.4.2.7 and figures A.7.a and A.7.b of ISO/IEC 11172-3: 1993(E). In general, frames can be made shorter and data reduction efficiency higher by allowing encoded audio data actually belonging to a frame in the encoded stream to be stored or sent in the data stream ahead of the corresponding frame that is characterised by its header. The amount of such data is signalled by a pointer 'main_data_begin' located within the corresponding header.
On one hand, this solution has many advantages, especially if encoded data streams with constant length frames are required. On the other hand it is of disadvantage if the main requirement is that all data belonging to a frame are located exactly between two consecutive headers. This requirement is typical for applications, where it is important to perform editing (cut, insert, splice) or to have random access to such encoded audio data streams.

A problem to be solved by the invention is enabling the conversion between an encoded audio stream with 'bit reservoir' into a stream where all encoded audio data are arranged after the corresponding header and before the following header. This problem is solved by the method disclosed in claim 1. An apparatus that utilises this method is disclosed in claim 7.

According to the invention, a data reduction encoded bit stream using the 'bit reservoir' feature is converted into a different-format bit stream that uses a different size of the 'bit reservoir', for example a smaller size, or a bit reservoir of size zero.
According to the invention, the data of a given encoded bit stream are re-arranged so that less data or no data for a given data frame remain outside that audio frame. Consequently the data field signalling the amount of data lying outside a given frame is adjusted to the new value or to the value zero. Furthermore, as a consequence of re-arranging the data, the total length of the encoded audio data frame is to be increased. As an option, because selection out of some pre-defined total-length values only is allowed, a number of data bits without meaning is added in order to fill the gap. Further, the new amended length of the frame is signalled in the data field defined for this type of information item. A change of this data field may make it necessary to re-calculate the 'crc_check' data field in the header, which is optional and which allows detection of errors in the header and in the following data, as defined in the above standard.

In principle, the inventive method is suited for converting a compressed audio data stream with fixed frame length including a bit reservoir feature into a different-format data stream, including the steps:
- re-arranging the useful data in the frames of said data stream such that each individual frame does not contain useful data from other frames, or does contain a non-original amount of data from other frames;
- filling the remaining part of each one of the data frames with fill data such that the corresponding data frame has one of multiple pre-defined data frame length values;
- setting the values of the pointers, which pointers are each arranged in a header of a data frame and point to the beginning of the useful data of that data frame, to corresponding values.

In principle, the inventive apparatus for converting a compressed audio data stream with fixed frame length including a bit reservoir feature into a different-format data stream, includes means for:
- re-arranging the useful data in the frames of said data stream such that each individual frame does not contain useful data from other frames, or does contain a non-original amount of data from other frames;
- filling the remaining part of each one of the data frames with fill data such that the corresponding data frame has one of multiple pre-defined data frame length values, and
- setting the values of the pointers, which pointers are each arranged in a header of a data frame and point to the beginning of the useful data of that data frame, to corresponding values.

Advantageous additional embodiments of the invention are disclosed in the respective dependent claims.

### Drawings

Exemplary embodiments of the invention are described with reference to the accompanying drawings, which show in:
- Fig. 1: Typical structure of MPEG Audio Layer 3 data stream;
- Fig. 2: Inventive structure of converted data stream;
- Fig. 3: Block diagram of inventive apparatus for data structure conversion.

### Exemplary embodiments

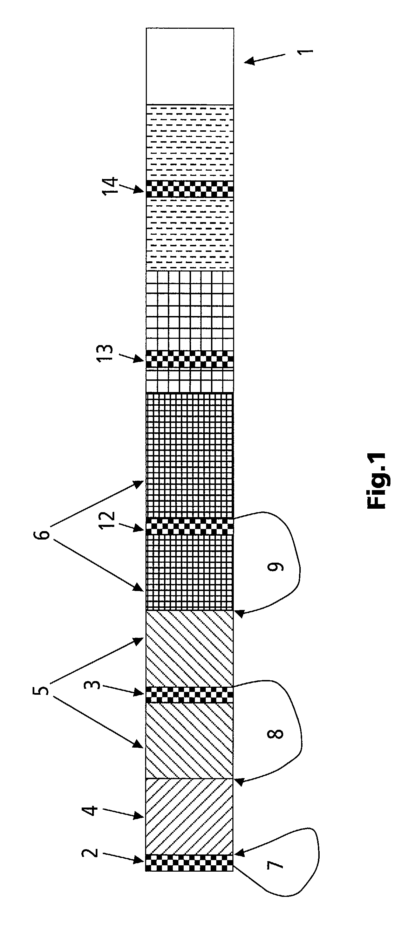

The typical structure of an mp3 data stream is shown in Fig. 1. Headers 2, 3, 12, 13, 14 occur in regular distances in the encoded data stream 1. The first data frame contains useful data 4 of the first data frame as well as useful data 5 for the second data frame. The second data frame contains useful data 5 of the second data frame as well as useful data 6 for the third data frame. The header 2 of the first data frame includes a first pointer 7 pointing to the beginning of the useful data 4 of the first data frame. That pointer has a zero value. Header 3 of the second data frame includes a second pointer 8 pointing to the beginning of the useful data 5 of the second data frame within the first data frame. Header 12 of the third data frame includes a third pointer 9 pointing to the beginning of the useful data 6 of the third data frame within the second data frame. It can be seen that at the start of the data stream 1 the data of the first frame is completely located within that frame. But data of the following frames are partly present in the preceding frames.

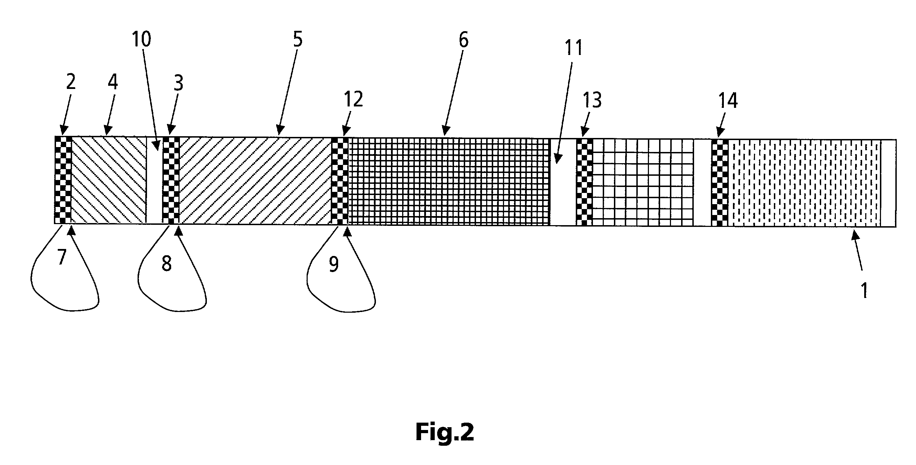

Fig. 2 shows how the output data stream of the conversion procedure looks like. All data of all frames are contained within the respective frames, but now - depending on the amount of encoded audio data - the individual frames have different lengths so that the headers 2, 3, 12, 13 and 14 occur in non-regular distances in the encoded data stream 1. As the standard only allows some pre-determined frame length values, some frames have to be filled with otherwise meaningless data. The first data frame contains useful data 4 of the first data frame as well as fill or stuffing data 10. The header 2 of the first data frame includes a first pointer 7 pointing to the beginning of the useful data of the first data frame. That pointer has a zero value. The second data frame contains useful data 5 of the second data frame only. Header 3 of the second data frame includes a second pointer 8 pointing to the beginning of the useful data 6 of the second data frame. That pointer has a zero value. The third data frame contains useful data 6 of the third data frame as well as fill or stuffing data 11. Header 12 of the third data frame includes a third pointer 9 pointing to the beginning of the useful data of the third data frame. That pointer has a zero value.
The new deviating frame length is signalled in the corresponding data field defined within the corresponding header. Also - in case it is present - the crc_check data field within the header is re-calculated.

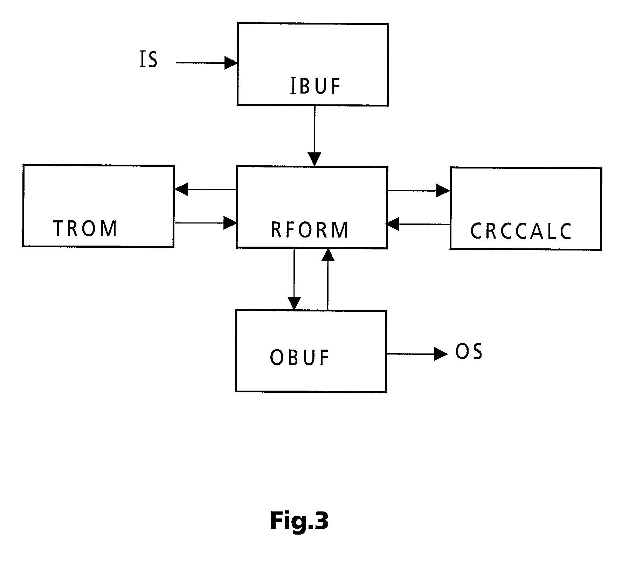

In Fig. 3, the apparatus capable of performing the described re-formatting or re-arranging procedure receives a data stream input signal IS corresponding to Fig. 1 that is stored in an input buffer IBUF. A re-formatter RFORM carries out the above-described data stream re-formatting procedure. Thereby a table TROM (e.g. stored in a ROM) provides the necessary data, e.g. the available frame length values. The re-formatted data stream can be intermediately stored in an output buffer OBUF that provides the re-formatted output data stream signal OS. Optionally, a CRC calculator CRCCALC (cyclic redundancy check) computes the corresponding CRC check data based on the re-formatted data stream structure for insertion into the new data stream by RFORM.

In case the inventive data stream format conversion is made effectively delivering a new data stream with variable bit rate, it is advantageous to add - preferably to prepend - to the new data stream a specific frame (denoted variable bit rate (VBR) frame) with otherwise no decodable audio information, containing pointers into the variable bit rate data stream. Such VBR data frames are typically attached to today's mp3 files or data streams with variable bit rate feature.

The invention can also be used to increase the size of the bit reservoir.
The compressed input audio data IS can also be of a type with variable data frame length.

## Claims

1. Method for converting a compressed audio data stream (1, IS) with fixed frame length including a bit reservoir feature into a different-format data stream (2, OS), **characterised by** the steps:
- re-arranging (RFORM) the useful data (4, 5, 6) in the frames of said data stream such that each individual frame does not contain useful data from other frames, or does contain a non-original amount of data from other frames;
- filling (RFORM) the remaining part of each one of the data frames with fill data (10, 11) such that the corresponding data frame has one of multiple pre-defined data frame length values (TROM);
- setting (RFORM) the values of the pointers (7, 8, 9), which pointers are each arranged in a header (2, 3, 12, 13, 14) of a data frame and point to the beginning of the useful data of that data frame, to corresponding values.

2. Method according to claim 1, wherein the data frames of said different-format data stream (2, OS) have a variable length and a corresponding header data field signals the adjusted data frame length.

3. Method according to claim 2, wherein each individual frame does not contain useful data from other frames and the values of said pointers (7, 8, 9) are set to zero representative values.

4. Method according to claim 3, wherein in a data field signalling the length of the bit reservoir the corresponding value is set to a zero representative value.

5. Method according to one of claims 1 to 4, wherein in each one of the data frames of said different-format data stream (2, OS) the useful data, that were located in said compressed audio data stream (1, IS) ahead of a corresponding data frame header, are re-arranged after said header, but are still arranged ahead of the useful data following said header in said compressed audio data stream (1, IS).

6. Method according to one of claims 1 to 5, wherein CRC check data located e.g. in a corresponding data field in the headers of said compressed audio data stream (1, IS) are re-calculated (CRCCALC) for said different-format data stream (2, OS).

7. Apparatus for converting a compressed audio data stream (1, IS) with fixed frame length including a bit reservoir feature into a different-format data stream (2, OS), including means (RFORM, TROM) for:
- re-arranging the useful data (4, 5, 6) in the frames of said data stream such that each individual frame does not contain useful data from other frames, or does contain a non-original amount of data from other frames;
- filling the remaining part of each one of the data frames with fill data (10, 11) such that the corresponding data frame has one of multiple pre-defined data frame length values, and
- setting the values of the pointers (7, 8, 9), which pointers are each arranged in a header (2, 3, 12, 13, 14) of a data frame and point to the beginning of the useful data of that data frame, to corresponding values.

8. Apparatus according to claim 7, including means (CRCCALC) for re-calculating CRC check data, which are located e.g. in a corresponding data field in the headers of said compressed audio data stream (1, IS), for said different-format data stream (2, OS).

9. Apparatus according to claim 7 or 8, wherein the data frames of said different-format data stream (2, OS) have a variable length and a corresponding header data field signals the adjusted data frame length, and optional each individual frame does not contain useful data from other frames and the values of said pointers (7, 8, 9) are set to zero representative values.

10. A data stream (2, OS) that is formatted using a method according to one of the claims 1 to 6.
